# EUROPEAN PATENT APPLICATION

(11) **EP 4 293 380 A1**
(43) Date of publication of application: **20.12.2023**
(21) Application number: 22179108.0
(22) Date of filing: 15.06.2022
(51) Int. Cl.: G01S 7/40, G01S 13/931

(54) **DETERMINING AN ELEVATION ANGLE OF AN ELECTROMAGNETIC SENSOR MOUNTED IN A VEHICLE**

(71) Applicant: Aptiv Technologies Limited, St. Michael (BB)
(72) Inventor: KALLI, Sashi Praveen, 42899 Remscheid (DE); WU, Huaming, 77815 Bühl (DE); LEONARDI, Roberto, 90403 Nürnberg (DE)
(74) Representative: Bardehle Pagenberg Partnerschaft mbB Patentanwälte Rechtsanwälte

(57) **Abstract**

The present invention relates to a method (10) for determining an elevation angle of an electromagnetic sensor mounted in a vehicle, wherein the method comprises the steps of exciting (11) a transmitter of the sensor with a plurality of different frequencies such that the transmitter radiates a plurality of first electromagnetic signals corresponding to the plurality of frequencies onto a target arranged in the field of view of the sensor, wherein each of the plurality of first electromagnetic signals is radiated at a different angle relative to the transmitter; receiving (12), by the sensor, a plurality of second electromagnetic signals being reflections of the first electromagnetic signals at the target; determining (13-17) the elevation angle of the sensor based on the second electromagnetic signals. The invention also relates to a corresponding sensor and a computer program for performing the method.

## Description

### 1. Technical field

The present invention generally relates to a method for determining an elevation angle of an electromagnetic sensor mounted in a vehicle. It also relates to a corresponding sensor which can be mounted in a vehicle and to a computer program for performing the method.

### 2. Technical background

Modern cars often comprise electromagnetic sensors that are for example part of advanced driver-assistance systems (ADAS) such as adaptive cruise control, lane change assistance, intersection assistance to name just a few examples. An example of such an electromagnetic sensor is a radar (radio detection and ranging) sensor which is used for detecting objects such as cars, pedestrians, obstacles, etc. The radar sensor emits an electromagnetic signal, usually as a directed beam, with a specific frequency such as for example 77 GHz. The signal is reflected by an object and the reflected signal (sometimes called "echo") is received and detected by the radar sensor and further processed to cause corresponding actions.

The sensor is mounted in the automotive shell, usually behind a cover. For a proper operation of the sensor and the systems to which it is connected it is of utmost importance that the sensor is correctly aligned with respect to the axes of the car. Therefore, a radar sensor mounted in a car is subject to an end of line testing at the car factory. Part of this testing is the determination of the elevation misalignment angle which is the vertical misalignment angle of the mounted radar sensor relative to the car. If the determined elevation misalignment angle exceeds a specified tolerance, i.e. deviation from a target angle, such as for example 3°, the sensor needs to be checked for proper placement.

Different methods for determining the elevation misalignment angle of a radar sensor mounted in a car are presently in use. According to a first method, a movable or tiltable mirror is arranged in the field of view of the sensor or car, respectively. The mirror is tilted within a predefined range, e.g. from -4° to 4° in steps of 1° and the amplitudes of the reflected radar signals at different angles are measured. A curve, such as a polynomial approximation of low order, is fitted to the measured data points (amplitude vs. elevation tilt) and the elevation misalignment angle is determined as the maximum of the curve. This method achieves a good accuracy, usually less than 0.5°, and works for any sensor type. However, the method is very time-consuming as the time taken is proportional to the number of elevation steps. In addition, it needs a precisely tiltable or movable target/mirror.

In an alternative method, two corner reflectors are used that are placed at different heights in front of the car/sensor and the amplitude of these targets are used to estimate the misalignment angle by comparing to the elevation gain pattern of the sensor. The targets are static and the method is performed a single shot measurement which saves time. However, this method needs a custom setup which may not be acceptable to all original equipment manufacturers (OEMs) because of additional costs. Furthermore, manufacturers usually would like to maintain their current setup or do not have enough space to accommodate a setup with two targets.

In yet an alternative method, the elevation angle reported from the sensor is used to estimate the misalignment angle. This method doesn't need a dynamic target and is a single shot measurement, i.e. the time needed for calibration is under one second. However, the accuracy of the determined misalignment angle is limited by the elevation angle accuracy and for radar sensors with sparse arrays, elevation accuracy is poor (more than or equal to 2°) and doesn't meet the requirements (typically less than 1°). Furthermore, elevation angle accuracy is deteriorated by close range targets (between 0.5 and 2 meters) and fascia or bumper (especially for corner radars).

The present invention seeks to address the problems of the prior art methods for determining the elevation angle of an electromagnetic sensor mounted in a vehicle. In particular, the invention aims at providing a method that allows to determine the elevation angle with a very high accuracy and within a short amount of time. In addition, modifications of the OEMs' setup should be kept to a minimum. Another object of the present invention is to provide a corresponding sensor and a computer program for performing the method.

### 3. Summary of the Invention

The above problems are overcome by a method according to claim 1, a sensor according to claim 14 and a computer program according to claim 15.

The proposed method for determining an elevation angle of an electromagnetic sensor mounted in a vehicle comprises a first step of exciting a transmitter of the sensor with a plurality of different frequencies such that the transmitter radiates a plurality of first electromagnetic signals corresponding to the plurality of frequencies onto a target arranged in the field of view of the sensor, wherein each of the plurality of first electromagnetic signals is radiated at a different angle relative to the transmitter. The proposed method comprises a second step of receiving, by the sensor, a plurality of second electromagnetic signals being reflections of the first electromagnetic signals at the target. In a third step the elevation angle of the sensor is determined based on the second electromagnetic signals.

Unlike the first mentioned prior art method the proposed method does not require a tiltable or movable target. Rather, a single static target can be used, e.g. a flat mirror or a corner mirror placed in front of the sensor or the car, respectively. Also, the proposed method allows to determine the elevation quickly, e.g. in under a second, because the target is static and does not need to be moved or tilted. Rather, instead of tilting/moving the target, the sensor radiates first electromagnetic signals, e.g. radar beams, with different frequencies and, thus, different radiation angles. In doing so, the method exploits the fact that the radiation angle of the transmitter is frequency dependent, which is sometimes called squint. Squint is naturally present with serially fed antennas and can be achieved with center fed antennas if at least one antenna is shifted in elevation relative to the other antenna(s). Thus, the radiation angle of the transmitter may be frequency dependent.

The first electromagnetic signals are reflected at the target and second electromagnetic signals, e.g. radar echoes, are reflected back to and received by the sensor. Based on the received second electromagnetic signals, the elevation of the sensor is determined. This is possible because the first electromagnetic signals and, thus, the reflected second electromagnetic signals, encode direction information. Based on this information, the elevation angle of the sensor can be estimated.

The accuracy of the proposed method is on par or even better than the accuracy when using a tiltable/movable target but much faster. In addition, the testing setup already in use at the OEMs may be used, if needed with just minor modifications.

The step of determining the elevation angle may comprise estimating amplitudes of the received second electromagnetic signals and determining the elevation angle of the sensor based on the estimated amplitudes. The amplitudes essentially encode information about the angle at which the first electromagnetic signals hit the target which in turn depends on the elevation angle of the sensor. A sensor being misaligned will have a different distribution of signal amplitudes compared to a properly aligned sensor and the elevation angle may be determined from the distribution of received signal amplitudes with high accuracy.

The step of determining the elevation angle may additionally comprise estimating a maximum amplitude as a function of angle of radiation or as a function of frequency based on the estimated amplitudes and determining the elevation angle of the sensor based on the angle of radiation and/or frequency corresponding to the estimated maximum. The maximum of the amplitudes (if needed after gain compensation) is achieved when the corresponding first electromagnetic signal hits the target with the center of its beam and the reflected second electromagnetic signal in turn hits the sensor with the center of its beam. If the angle at which this first electromagnetic signal was emitted at the sensor is known, the elevation angle of the sensor can be estimated based on the amplitude maximum. The maximum may be based on a single measurement, wherein each frequency is emitted once, or may be based on multiple measurements, such that the maxima of the multiple measurements are combined into a single maximum, e.g. by using averaging.

The maximum may be determined either as a function of angle of radiation or a as a function of frequency. In the first case, the angle at which the maximum is located directly corresponds to the elevation angle. In the latter case, the frequency at which the maximum is located needs to be mapped to a corresponding angle.

Estimating the maximum amplitude may comprises fitting a curve to the estimated amplitudes as a function of the corresponding angles and/or frequencies and determining the maximum of the curve. Using a curve fit allows to interpolate the finite number of measurement points (amplitude vs. frequency or angle) in order to achieve an even more accurate determination of the elevation angle. Alternatively, the number of measurement points may be reduced while maintaining the accuracy in order to accelerate the procedure.

The method may further comprise mapping at least one frequency at which one of the first plurality of electromagnetic signals is radiated to a corresponding angle of radiation of the corresponding electromagnetic signal. As mentioned, the method exploits the frequency dependence of the radiation angle, sometimes called squint. Thus, by mapping the excitation frequency of the transmitter, e.g. an antenna array, to the angle of radiation, the elevation angle of the sensor can be determined based on the signals reflected at the target. The mapping may occur at the sensor by means of a look-up-table. The mapping may be specific to the particular sensor or may be based on an average of a number of sensors.

The step of estimating amplitudes of the received second electromagnetic signals may comprise compensating for the gain of the sensor as a function of frequency. In this way, the accuracy of the angle estimation is increased because the frequency dependence of the antenna gain is essentially factored out.

The steps of exciting the transmitter, receiving the second electromagnetic signals and determining the elevation angle may be repeated N times and the elevation angle may be determined as the mean of the N repetitions. In this way, an average over N measurements is obtained which increases the accuracy (i.e. reduces bias) even further. The higher N, the closer the result will be to the true elevation alignment angle as statistical fluctuations cancel each other out.

The transmitter may comprise an array of radiator elements. The radiation angle of such an array is frequency dependent if the array is serially fed. As already explained, the radiation angle is exploited in the proposed method to estimate the elevation angle. Thus, by using an array of radiator elements, frequency dependence may naturally occur without any additional modifications.

The radiator elements may be excited in series, or the array may be excited between two radiator elements or with a feeding network and wherein the transmitter comprises a further array being shifted in elevation relative to the other array and wherein both arrays are excited simultaneously. As explained, antenna squint naturally occurs with serially fed antennas. In case of center fed arrays, at least one additional array (i.e. antenna) is needed which is shifted in elevation relative to the other antenna in order to establish the frequency dependent radiation characteristic. Generally, in the context if the present invention, an antenna may comprise an array of radiator elements.

The step of estimating amplitudes of the received second electromagnetic signals may comprise normalizing at least a first amplitude corresponding to a first frequency based on a parameter to obtain a first normalized amplitude.. For example, normalizing may be done by dividing the first amplitude by the parameter. Preferably, the parameter is a third amplitude corresponding to a third frequency different from the first frequency. In this way, the amplitudes are normalized with respect to a reference frequency (the third frequency) and the overall gain of the sensor and the reflection characteristic of the target are compensated which allows to increase the accuracy. Preferably, the step of estimating amplitudes of the received second electromagnetic signals comprises normalizing at least a first and a second amplitude corresponding to a first frequency and a second frequency, respectively, based on a parameter to obtain first and second normalized amplitudes. For example, normalizing may be done by dividing the first and second amplitudes by the parameter. Using two amplitudes that are normalized increases the accuracy of the elevation angle to be determined. In general, the accuracy is proportional to the number of frequencies being used. Preferably, the parameter is a third amplitude corresponding to a third frequency different from the first and second frequencies.

The step of determining the elevation angle of the sensor may comprise comparing at least the first normalized amplitude against values in a look-up-table stored in the sensor, wherein the look-up-table contains signal amplitude values corresponding to different radiation angles at at least the first frequency. As mentioned, the distribution of amplitudes as a function of excitation frequencies encode the elevation angle of the sensor. By using a look-up-table in the sensor and by comparing the received amplitudes with the look-up-table, the elevation angle may be estimated. The look-up-table also avoids providing an explicit mapping of excitation frequency to radiation angle as this information may be encoded in the stored signal amplitudes. Preferably, the step of determining the elevation angle of the sensor comprises comparing the first and second normalized amplitudes against values in a look-up-table stored in the sensor, wherein the look-up-table contains signal amplitude values corresponding to different radiation angles at at least the first and second frequencies. As mentioned, accuracy is increased the more frequencies are used for determining the elevation angle.

The look-up-table may contain unit-specific values. This allows to compensate for any variation among different units. In this case, the look-up-table may be generated when calibrating and/or testing the sensor before being delivered to the OEM. Alternatively, the look-up-table may contain average values across a plurality of units. In this case, individual calibration is not needed.

The step of comparing may comprise calculating a difference between at least the first normalized amplitude and the signal amplitude values contained in the look-up-table. As mentioned, the look-up-table encodes the elevation angle in the stored signal amplitudes. Calculating the difference between the measured amplitudes (at different frequencies) and the amplitudes in the look-up-table essentially corresponds to finding the elevation angle that is the most plausible given the measured data. Preferably, the step of comparing may comprise calculating a difference between the first and second normalized amplitudes and the signal amplitude values contained in the look-up-table. As mentioned, accuracy is increased the more frequencies are used for determining the elevation angle.

The calculation of the difference may comprise a curve fit in order to obtain the difference as a function of elevation angle. Thus, the finite number of amplitude points in the look-up-table can be interpolated to obtain a more accurate result.

The method may further comprise the step of estimating the location of the minimum of the difference as a function of the angle, wherein the location corresponds to the determined elevation angle. The difference can be understood as a distance measure in amplitude space. The minimum of the difference corresponds to the most plausible elevation angle.

A second aspect of the present invention relates to an electromagnetic sensor mountable on a vehicle, wherein the sensor is adapted to perform a method as described above and as will be described in more detail with reference to the figures below. The sensor may comprise a transmitter adapted to radiate first electromagnetic signals at different frequencies as described herein. The sensor may comprise a look-up-table comprising signal amplitude values corresponding to different radiation angles at different excitation frequencies of the transmitter. The look-up-table may be used for estimating an elevation angle of the senser when mounted in a vehicle as described herein.

A third aspect of the present invention relates to a computer program comprising instructions which, when executed on the computer, cause the computer to perform a method as described above and as will be described in more detail with reference to the figures below. The computer program may be executed by the sensor described herein.

Thus, with respect to the sensor of the second aspect and the computer program of the third aspect of the invention, the statements made with respect to the method of the invention apply.

### 4. Brief Description of the Drawings

Possible embodiments of the present invention are described in more detail in the following detailed description with reference to the following figures.
Fig. 1: Illustration of a prior art method for determining the elevation misalignment angle;
Fig. 2: Illustration of the principle underlying the present invention;
Fig. 3: Exemplary embodiment of a method according to the present invention;
Fig. 4: Determination of the elevation angle of the exemplary method of Fig. 3 in more detail;
Figs. 5A-C: Exemplary method of calibrating a sensor in the context of the present invention;
Figs. 6A-C: Exemplary method according to the present invention using a look-up-table stored in a sensor;
Fig. 7A: Frequency dependent radiation angle of a typical serially fed antenna array that can be used as a transmitter in the context of the present invention;
Fig. 7B: Gain pattern of a center fed antenna array;
Fig. 7C Gain pattern of two combined center fed antennas; and
Fig. 8: Typical dependence of amplitude and squint on excitation center frequency of an antenna array that can be used in the context of the present invention.

### 5. Detailed Description of Possible Embodiments

For the sake of brevity, only a few embodiments will be described below. The person skilled in the art will recognize that the features described with reference to these specific embodiments may be modified and combined in different ways and that individual features may also be omitted. The general explanations in the sections above also apply to the more detailed explanations below.

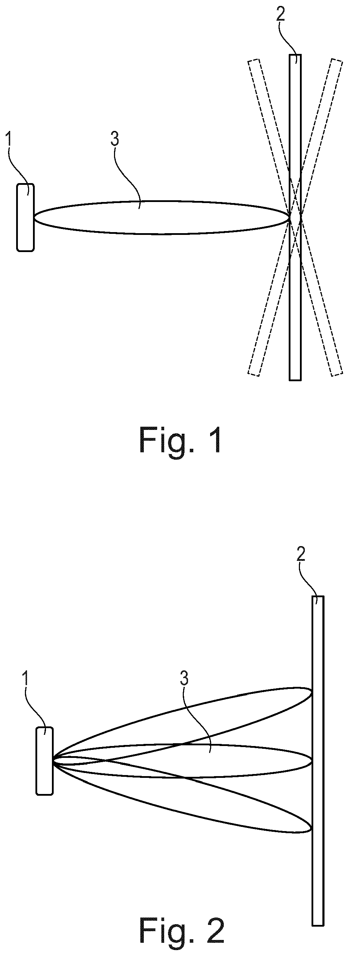

Fig. 1 illustrates a prior art method for determining the elevation misalignment angle (the first prior art method mentioned in the introduction). In this method a sensor 1, such as a radar sensor mounted in a car, radiates a beam onto a target 2, e.g. a flat mirror. The target 2 can be tilted, e.g. from -4° to 4° in steps of 1°. The beam 3 incident on the target 2 is reflected into the direction of the sensor. The signal amplitude measured at the sensor depends on the actual angle of the mirror 2. The highest signal amplitude is expected when the beam hits the flat mirror at 90° because in this case the center of the reflected beam will exactly hit the sensor 1. If the sensor 1 is exactly aligned, the maximum amplitude will be measured at 0° tilt. If on the other hand the sensor 1 is misaligned, i.e. tilted up- or downwards, the maximum amplitude will occur at an angle different from o° tilt. In fact, because the incident beam is reflected at 90°, the tilt angle of the mirror directly corresponds to the elevation angle of the sensor 1 (assuming the mirror 2 is at the same height as the sensor 1 like in the example of Fig. 1).

Fig. 2 illustrates the principle underlying the method according to the present invention. The target 2 in this example is a mirror that is fixed, i.e. is not tilted or moved while the method is performed. The mirror 2 is placed in the field of view of the sensor 1 or the vehicle in which the sensor 1 is mounted. The sensor 1 radiates a plurality of first electromagnetic signals 3, e.g. radar beams, in the direction of the mirror 2 at different frequencies. The radiation angle of a transmitter in the sensor 1 is frequency dependent, i.e. each of the plurality of first electromagnetic signals 3 is radiated at a different angle relative to the transmitter. The first electromagnetic signals 3, or at least a portion of each signal, are reflected at the mirror 2. The reflected electromagnetic signals are denoted as second electromagnetic signals in the context of this description to avoid a confusion with the first electromagnetic signals 3 emitted by the sensor 1. Besides reflections from the mirror 2, the second electromagnetic signals may also comprise multibounce reflections between fascia/bumper and the radar sensor as well as reflections from other targets, but these do not impair the proposed method and sometimes multibounce signals may even be helpful. The second electromagnetic signals are received by the sensor 1, e.g. by a receive antenna which could be the same as the transmit antenna or separate therefrom. The elevation angle of the sensor 1 is then determined based on the second electromagnetic signals. This could be done e.g. by determining the maximum amplitude of the received second electromagnetic signals.

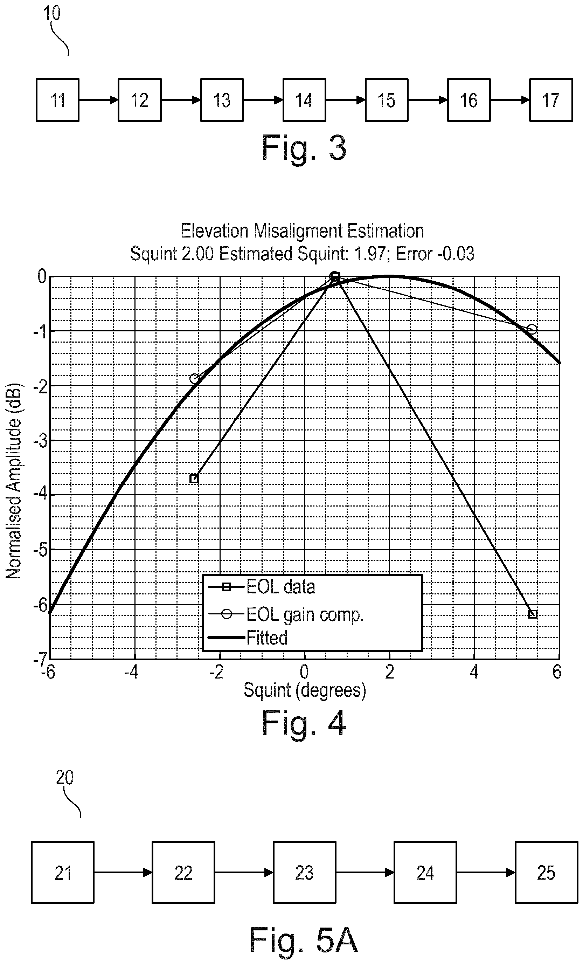

Fig. 3 illustrates an exemplary embodiment of a method 10 according to the invention in more detail. At method step 11 a plurality of first electromagnetic signals 3 is emitted by exciting a transmitter of a sensor, such as the sensor 1 of Fig. 2. The signals 3 are emitted towards a target, such as the mirror 2 of Fig. 2. The signals 3 could either be emitted sequentially or simultaneously. As the signals 3 have different frequencies, their reflections or echoes can be distinguished even in the latter case. The first electromagnetic signals 3 do not only differ by frequency, but also by the angles at which they are emitted at the sensor 1 or its transmitter. In the example of Fig. 3 three first electromagnetic signals 3 are emitted at three different frequencies. As the signals have a finite duration, they can be characterized by their center frequency. Exemplary center frequencies are 75 GHz, 76.5 GHz and 78 GHz, but other frequencies could be used in the context of the present invention.

The first electromagnetic signals 3 are reflected at the target 2 as was already described with respect to Fig. 2. The reflected signals are denoted as second electromagnetic signals herein and are received in method step 12 by the sensor 1 or more precisely by a receiver in the sensor 1. The amplitudes are then corrected for the antenna gain in method step 13 to obtain normalized amplitudes. To this end, the frequency dependent gain needs to be known. This could either be specific for the particular sensor 1 or could be an average across multiple sensors. At step 14 the center frequencies of the three emitted beams are mapped to their corresponding radiation angle (also called emission angle or squint). Again, this mapping could be unit specific or could be an average across multiple units.

At step 15 a curve fit is performed, i.e. a function is fitted to the three data points (normalized amplitude vs. angle). The function could for example be a low order polynomial such as a quadratic and the fit could be based on the method of least squares. Once the function is fitted, its maximum is determined in step 16. The elevation angle is then the location of the maximum, i.e. the angle at which the fitted function takes its maximum. The elevation angle of the sensor 1 is reported at step 17.

Fig. 4 illustrates the determination of the elevation angle of the exemplary method of Fig. 3 in more detail. The diagram shows the amplitudes of the three received second electromagnetic signals versus the squint (the angle at which the first electromagnetic signals were emitted at the sensor). The data points shown as squares correspond to the measured amplitudes (denoted as "EOL data"). The data points shown as circles correspond to the normalized, i.e. gain compensated, amplitudes being the result of step 13 in Fig. 3 (denoted as "EOL gain comp."). The curve shown in the diagram is obtained by a curve fit to the three normalized data points. The maximum of the curve is located at an angle of 1.97°. This corresponds to the determined elevation (misalignment) angle. The actual, true angle in this example was 2°. Thus, the method in this example yielded an angle with an error of just -0.03° which illustrates the high accuracy of the method according to the invention.

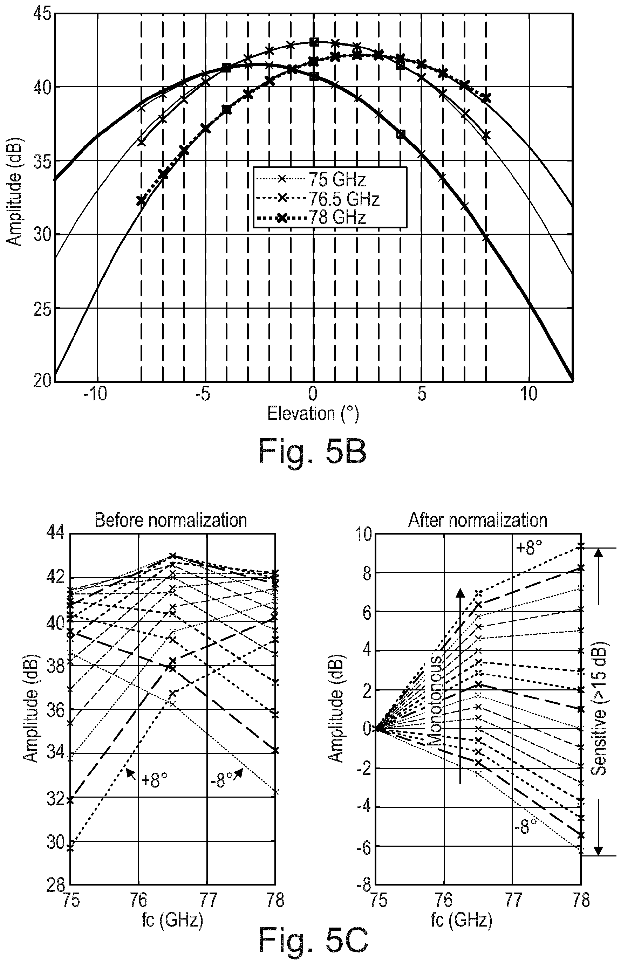

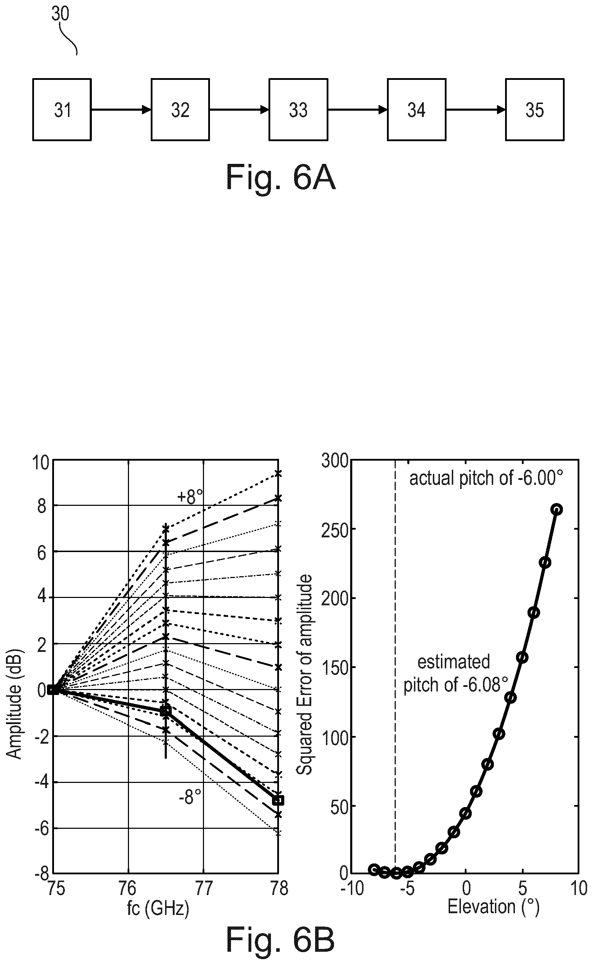

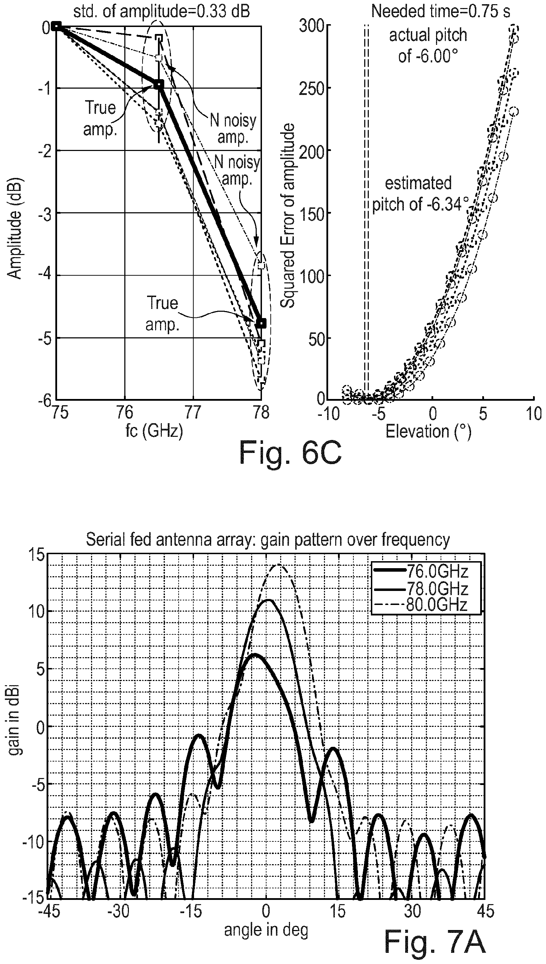

As mentioned, in the exemplary method of Figs. 3 and 4 the mapping of frequency to radiation angle of the first electromagnetic signals (e.g. radar beams) needs to be known. Also, the frequency dependent gain of the sensor needs be known in order to compensate for the gain and to normalize the measured amplitudes. Figures 5A, 5B and 5C illustrate an exemplary method 20 of how this calibration can be done when testing the sensor, i.e. when doing the end of line test of the sensor before it is actually delivered to the OEM. To this end a look-up-table is stored in the sensor. Figures 6A and 6B and 6C illustrate how this look-up-table is used at the OEM when actually determining the elevation angle of the sensor mounted in a vehicle.

In method step 21 the amplitudes of three radar beams being reflected by three targets are measured at the sensor. The beams have center frequencies of 75 GHz, 76.5 GHz and 78 GHz, respectively, and the targets are positioned at an elevation of -4°, 0° and 4° relative to the sensor. Thus, 3×3 data points are obtained.

At step 22 a curve fit to these data points is made, i.e. three separate curves are fitted, each corresponding to a different center frequency. This is illustrated in more detail in Fig. 5B showing the measured data points as squares and the corresponding three fitted curves. As such, the curves correspond to the angle (or elevation) dependence of the received amplitudes. Function values of the fitted curves are then calculated at different angles. In the example of Fig. 5B, the function values are calculated from -8° to 8° in steps of 1°. Thus, 3×17 data points are obtained (corresponding to three frequencies and 17 different angles).

At step 23 the data points corresponding to 76.5 GHz and 78 GHz are normalized to the amplitudes of the data points corresponding to 75 GHz. In this way a gain compensation or normalization is obtained. Normalization results in 2×17 data points in this example. The normalization is illustrated in more detail in Fig. 5C which shows the 3×17 raw data points before normalization to the left and the 2×17 data points obtained after normalization to the right. As can be seen in the right diagram, the amplitude dependence after normalization is monotonous with respect to the angle. This is the basis for the determination of the elevation angle of the sensor at the OEM as will be described in more detail with respect to Figs. 6A, 6B and 6C.

Step 24 is an optional step in which the previous steps are repeated N times to reduce the bias of the resulting look-up-table. Thus, for each point of the 2×17 data points obtained by step 23 a mean value is calculated from the N repetitions.

Finally in step 25 the resulting 2×17 data points are stored in the sensor as a look-up-table. This could for example be a 2×17 array in a non-volatile memory of the sensor. Thus, the look-up-table encodes the dependence of the normalized amplitudes as a function of angle (17 different angles from 8° to 8° in steps of 1° in this example) at different frequencies (two center frequencies in this example).

Figures 6A, 6B and 6C exemplarily illustrate how the look-up-table described previously can be used to determine an elevation angle of a sensor mounted in a vehicle.

In the exemplary method 30 illustrated in Fig. 6A, in step 31 the amplitudes of three radar beams being reflected by a single static target are measured at the sensor. This was already described with respect to the exemplary method of Fig. 3 and the setup is illustrated in Fig. 2. The beams have center frequencies of 75 GHz, 76.5 GHz and 78 GHz, i.e. the same frequencies which were used to generate the look-up-table. The amplitudes are then normalized using the amplitude at 75 GHz, e.g. by dividing all amplitudes by the amplitude at 75 GHz. The resulting normalized amplitudes are shown in the diagram of Fig. 6B which shows the measured, normalized amplitudes (with rectangles) together with the amplitudes stored in the look-up-table (with crosses, compare to the right side of Fig. 5C).

In step 32 the squared error is calculated between the measured, normalized data points which are two data points in this example, i.e. at 76.5 GHz and 78 GHz, and the data points in the look-up-table, which are 2×17 data points in this example. The resulting errors are illustrated in the diagram on the right side of Fig. 6B which shows the squared error of the amplitudes as a function of the elevation angle.

In step 33 the minimum of the error is determined. The location of the minimum corresponds to the determined elevation angle. In this example, the determined elevation angle was -6.08°, whereas the actual angle was -6° which again shows the high accuracy of the method. The minimum may be determined by fitting a curve to the squared error vs. elevation points (see e.g. Fig. 6B) and computing its minimum. Alternatively, the minimum may be directly calculated from those points e.g. by using a method such as fractional bin center.

Step 34 is an optional step in which the previous steps are repeated N times to reduce the bias of the resulting elevation angle. Thus, the final elevation (misalignment) angle is obtained as an average of N repetitions. Fig. 6C illustrates the benefit of repeating the procedure. As can be seen on the left of Fig. 6C, the measured amplitudes fluctuate around the true amplitudes due to noise which results in different curves of amplitude versus elevation as shown on the right of Fig. 6C. By combining the measurements of N different repetitions, the standard deviation of the resulting elevation angle can be reduced by a factor of sqrt⁻¹(N).

Finally, in step 35 the resulting elevation (misalignment) angle is reported.

Generally, the method of the present invention may be implemented by hardware, software or a combination of hard- and software. Software maybe a computer program comprising instructions that cause a computer such as a central processing unit of a sensor described herein to perform the method of the invention. The sensor may also send and receive electromagnetic signals (e.g. first and second electromagnetic signals) as described herein and the recorded data, such as the signal amplitude values described herein, are then transferred to an external device were the data is processed to determine the elevation angle as described herein. In this case, the external device may be a computer executing the method or at least a part thereof based on computer readable instructions.

Fig. 7A illustrates the frequency dependent radiation angle of a typical antenna array that can be used as a transmitter in the context of the present invention. The diagram shows the gain of the emitted beams as a function of angle for three different excitation frequencies. It must be emphasized that in this example the antenna array is serially fed so that the phase difference between the radiator elements of the array leads to a pronounced frequency dependence of the emission angle of the beams as can be best seen with respect to the beams' main lobes in the diagram.

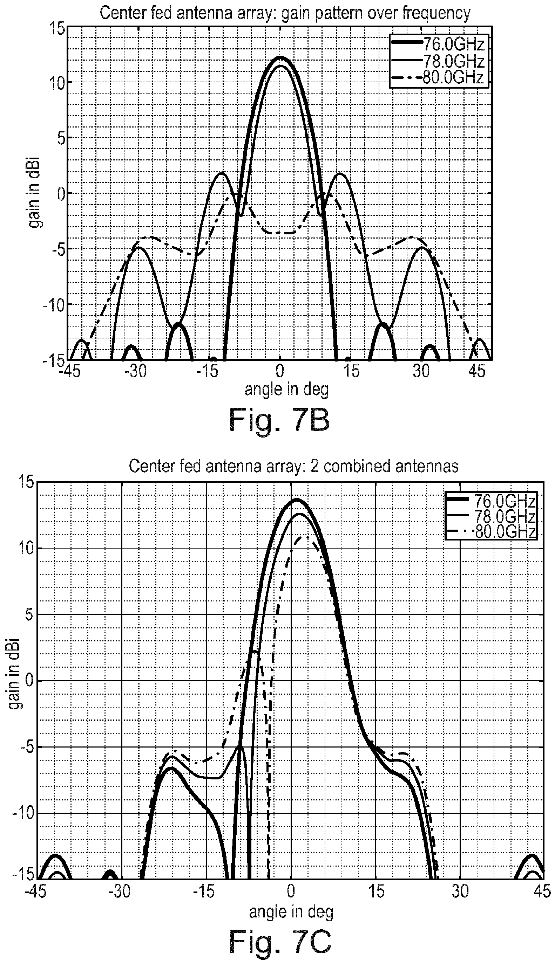

In contrast, Fig. 7B illustrates the gain pattern of a center fed antenna array. In this case, the two branches of the array compensate and a frequency dependence can only be observed in the side lobes but not in the main lobe. However, center-fed antenna arrays can nevertheless be used in the context of the present invention, namely by using a second antenna that is shifted in elevation relative to the other antenna(s). In this case, frequency dependent squint can be observed and exploited for the method according to the invention. This is depicted in the diagram of Fig. 7C which shows the gain pattern of two center fed antennas being combined, i.e. one of the antennas is shifted in elevation relative to the other antenna. The elevation of the gain pattern's main lobe now shows a distinct frequency dependence which can be exploited in the context of the present invention.

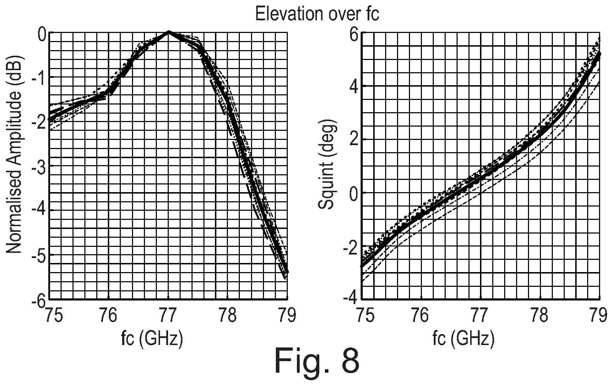

Fig. 8 shows the typical dependence of amplitude and squint on excitation center frequency (fc) of an antenna array that can be used in the context of the present invention. The diagrams show measurements taken for several units of the sensor and the corresponding variation. The thick curve shows the average of amplitude (left side) and squint (right side) over the plurality of units. The amplitudes are normalized to the amplitude measured at 77 GHz. As mentioned with respect to Fig. 3, the frequency dependent gain (left side of Fig. 8) and the frequency dependent squint (right side of Fig. 8) can be used to determine the elevation angle as outlined with respect to Fig. 3. Alternatively or in addition, a look-up-table can be used as outlined with respect to Figs. 5A-C and 6A-C.

## Claims

1. Method (10) for determining an elevation angle of an electromagnetic sensor mounted in a vehicle, wherein the method comprises the steps:
exciting (11) a transmitter of the sensor with a plurality of different frequencies such that the transmitter radiates a plurality of first electromagnetic signals corresponding to the plurality of frequencies onto a target arranged in the field of view of the sensor, wherein each of the plurality of first electromagnetic signals is radiated at a different angle relative to the transmitter;
receiving (12), by the sensor, a plurality of second electromagnetic signals being reflections of the first electromagnetic signals at the target; and
determining (13-17) the elevation angle of the sensor based on the second electromagnetic signals.

2. Method (10) of claim 1, wherein the step of determining the elevation angle comprises:
estimating amplitudes of the received second electromagnetic signals;
determining the elevation angle of the sensor based on the estimated amplitudes.

3. Method (10) of claim 2, wherein the step of determining the elevation angle additionally comprises:
estimating (16) a maximum amplitude as a function of angle of radiation or as a function of frequency based on the estimated amplitudes;
determining the elevation angle of the sensor based on the angle of radiation and/or frequency corresponding to the estimated maximum.

4. Method (10) of claim 3, wherein estimating (16) the maximum of amplitude comprises:
fitting (15) a curve to the estimated amplitudes as a function of the corresponding angles and/or frequencies; and
determining the maximum of the curve.

5. Method (10) of one of claims 1-4, further comprising:
mapping (14) at least one frequency at which one of the first plurality of electromagnetic signals is radiated to a corresponding angle of radiation of the corresponding electromagnetic signal.

6. Method (10) of one of claims 2-5, wherein the step of estimating amplitudes of the received second electromagnetic signals comprises:
compensating (13) for the gain of the sensor as a function of frequency.

7. Method (10) of one of claims 1-6, wherein the steps of exciting the transmitter, receiving the second electromagnetic signals and determining the elevation angle are repeated N times and the elevation angle is determined as the mean of the N repetitions.

8. Method (10) according to one of claims 1-7, wherein the transmitter comprises an array of radiator elements.

9. Method (10) according to claim 8, wherein the radiator elements are excited in series, or wherein the array is excited between two radiator elements or with a feeding network and wherein the transmitter comprises a further array being shifted in elevation relative to the other array and wherein both arrays are excited simultaneously.

10. Method (10) of one of claims 2-9, wherein the step of estimating amplitudes of the received second electromagnetic signals comprises:
normalizing at least a first amplitude corresponding to a first frequency based on a parameter to obtain a first normalized amplitude.

11. Method (10) of claim 10, wherein the step of determining the elevation angle of the sensor comprises:
comparing at least the first normalized amplitude against values in a look-up-table stored in the sensor, wherein the look-up-table contains signal amplitude values corresponding to different radiation angles at at least the first frequency.

12. Method (10, 30) of claim 11, wherein the step of comparing comprises:
Calculating (32) a difference between at least the first normalized amplitude and the signal amplitude values contained in the look-up-table.

13. Method (10, 30) of claim 12, further comprising the step:
Estimating (33) the location of the minimum of the difference as a function of the angle, wherein the location corresponds to the determined elevation angle.

14. Electromagnetic sensor (1) mountable on a vehicle, wherein the sensor (1) is adapted to perform a method (10) of one of claims 1-13.

15. Computer program comprising instructions which, when executed on the computer, cause the computer to perform a method of one of claims 1-13.
